# EUROPÄISCHE PATENTSCHRIFT

(11) **EP 1 841 641 B1**
(45) Veröffentlichungstag und Bekanntmachung des Hinweises auf die Patenterteilung: **09.12.2009**
(21) Anmeldenummer: 06700196.6
(22) Anmeldetag: 12.01.2006
(51) Int. Cl.: B62M 1/04, B62K 3/00

(54) **MEHRFACHFUNKTIONS-ROLLER**
MULTIFUNCTIONAL ROLLER
VELO MULTIFONCTION

(30) Priorität: 18.01.2005 CH 68052005
(43) Veröffentlichungstag der Anmeldung: 10.10.2007
(73) Patentinhaber: Rose, Christoph, 8222 Beringen (CH)
(72) Erfinder: Rose, Christoph, 8222 Beringen (CH)
(74) Vertreter: Peege, Klaus
(86) Internationale Anmeldenummer: PCT/CH2006/000026
(87) Internationale Veröffentlichungsnummer: WO 2006/076823

(56) Entgegenhaltungen:
- CH-A5- 694 761
- DE-U1- 20 120 092
- US-A- 5 630 774
- US-A- 5 800 315
- US-B1- 6 648 353

## Beschreibung

Die Erfindung betrifft einen Mehrfachfunktions-Roller nach dem Oberbegriff des Patentanspruches 1.

Mehrfachfunktions-Roller sind zweiräderige Fahrzeuge, die der Fortbewegung bei gleichzeitig gymnastischen Bewegungsabläufen dienen. Mehrfachfunktions-Roller werden folgend auch Gymnastik-Roller, weiter verkürzt Gymroller, genannt. Die gymnastische Funktion eines Gymrollers liegt darin, das zum Antrieb eines Gymrollers ein darauf stehender Fahrer vermittels der Muskulatur eines Beines eine abwärts gerichtete Kraft entfaltet, während sich die Muskulatur des anderen Beines kraftlos stellt. Diese Kraftentfaltung eines Beines bei gleichzeitiger Kraftlosstellung des anderen ist dem Bewegungsablauf der Beine beim Treppensteigen ähnlich, einem Bewegungsablauf oder gymnastische Übung, die neben einem Muskeltraining, insbesondere der Stärkung der Herz-Kreislauffunktionen des Menschen forderlich sind.

Ein Gymroller, der der vorstehend umrissenen Funktion der Fortbewegung und Gymnastik nachkommt, ist aus der US Patentschrift 5.630.774 bekannt. Der bekannte Gymroller umfasst als Teil seines Rahmens ein Chassis, an dessen in Fahrtrichtung gesehen vorderen Ende als weiterem Rahmenteil ein Stützrohr angelenkt ist, in dem eine Steuersäule gelagert ist, die einends das Vorderrad und anderenends einen Lenker lagert. Am entgegen der Fahrtrichtung gesehenen Ende des Chassis, das Chassis ist als Rohr ausgebildet, ist eine Gabel mit zwei zueinander beabstandeten Armen vorgesehen, zwischen denen das Hinterrad gehaltert ist. Jeder Arm trägt einen vom Chassis her gesehenen aufwärts gerichteten Bügel oder Tragstange, an dessen bzw. deren oberen freien Ende eine Lagerung vorgesehen ist, um die ein in Richtung Chassis abwärts gerichteter Schwenkhebel pendelt. Am freien Ende des Schwenkhebels ist auch eine Lagerung vorgesehen. Der bekannte Roller umfasst einen Trittbrettantrieb, bestehend aus einem Kurbeltrieb mit zwei Kurbeln, einem ersten vorderen Kettenrad, einem zweiten hinteren am Hinterrad angeordneten Kettenrad, einer Antriebskette und zwei Trittbrettern, deren vorderen Enden an den freien Enden der Kurbeln und hinteren Enden an den freien Enden der Schwenkhebel in Lagern beweglich gehaltert sind.

Dieser vorstehend beschriebene bekannte Antrieb wird wegen der abwärts gerichteten hängenden Schwenkhebel auch "hängender Antrieb" genannt. Gymroller dieser bekannten Ausgestaltung erfüllen durchaus die ihnen zugedachten Funktionen, als nachteilig wird bei ihnen jedoch ihr unbefriedigender Tretkomfort bezeichnet. Unter Tretkomfort wird hier der notwendige Kraftaufwand beim Anfahren des Rollers aus dem Stand, also ohne Anschieben verstanden, dies in Verbindung mit einem Positionswechsel des Fahrers auf den Trittbrettern, bei relativ niedriger Geschwindigkeit, was als Risiko bezüglich Fahrstabilität angesehen wird. Diese Instabilität bei anfänglichem Fahrbetrieb tritt beim Fahrer nach Antritt des Rollers reflexartig ein, da die Position des Fahrers bei Antritt ergonomisch nicht mit der eines entspannten Fahrbetriebes vereinbar ist. Zur Überwindung des hohen Anfahrkraftaufwandes stellt sich der Fahrer soweit wie möglich auf die vorderen Enden der Trittbretter, um so auch die höchstmögliche Hebelwirkung zu erzielen. Auf diese Arbeitsstellung ist der Roller für einen kontinuierlichen Betrieb konstruktiv nicht eingerichtet, so dass der Fahrer nach Antritt so früh wie möglich und reflexartig die Stellung auf dem Roller sucht, für die der Roller für einen körperverträglichen, beschwerdefreien Betrieb ausgelegt ist und dieser Betrieb ist in etwa dann gewährleistet, wenn der Fahrer auf der Mitte der Trittbretter steht. Der Fahrer verändert also seine Position auf den vorderen Enden der Trittbretter zur Mitte der Trittbretter und dies bei relativ niedriger Fahrgeschwindigkeit und Rollerstabilität. Es hat nicht an Versuchen gefehlt, den Tretkomfort durch konstruktive Massnahmen, wie beispielsweise Variation der Tretkurbelkreise, Längenabmessung der Trittbretter, einer besonderen Bemessung der Schwenkhebellänge, vorstehende Massnahmen auch in Kombination mit der Längenbemessung des Gymroller-Chassis, der Übersetzungsverhältnisse der Kettenräder etc. zu lösen. Jedoch haben diese Massnahmen bei Tretrollern mit hängendem Antrieb nicht dazu geführt, den Tretkomfort merklich zu verbessern.

Hiervon ausgehend hat sich der Erfinder die Aufgabe gestellt, einen Tretroller nach der im Oberbegriff des Patentanspruches 1 näher beschriebenen Ausgestaltung zu schaffen, der die Nachteile des bekannten Tretrollers vermeidet und die Aufgabe wird bei Tretrollern nach dem Oberbegriff des Anspruches 1 vermittels den kennzeichnenden Merkmalen gelöst.

Vorteilhafte Weiterbildungen des Gegenstandes nach Patentanspruch 1 kennzeichnen die dem Patentanspruch 1 folgenden Ansprüche.

Weitere Vorteile, Merkmale und Einzelheiten der Erfindung ergeben sich aus der folgenden zeichnerischen Darstellung und Beschreibung einer bevorzugten Ausführungsform, deren Zeichnung darstellt in;
- Fig. 1: einen Gymroller nach der Erfindung in der Seitenansicht,
- Fig. 2: eine Seitenansicht des Rückendes des Gymrollers nach Fig. 1.

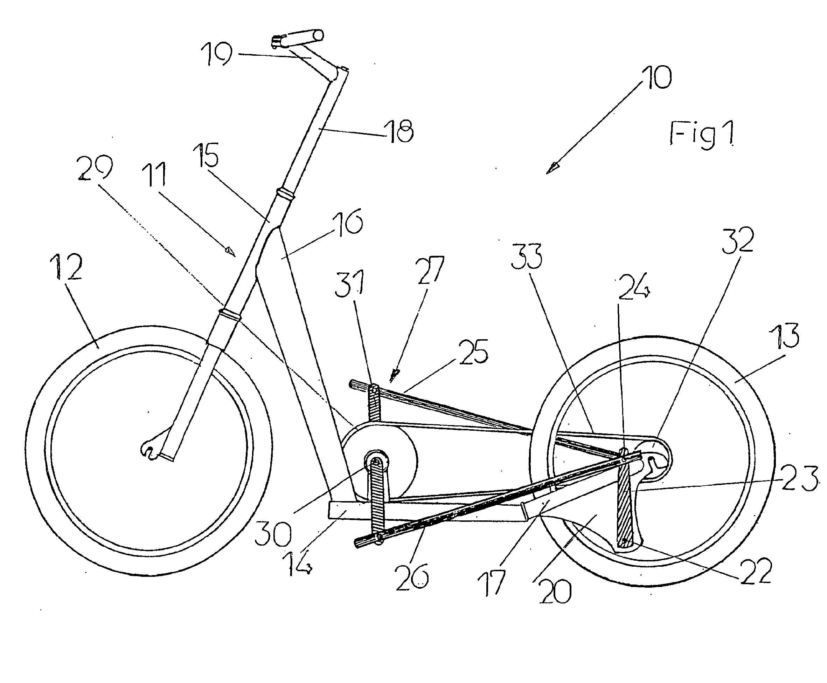

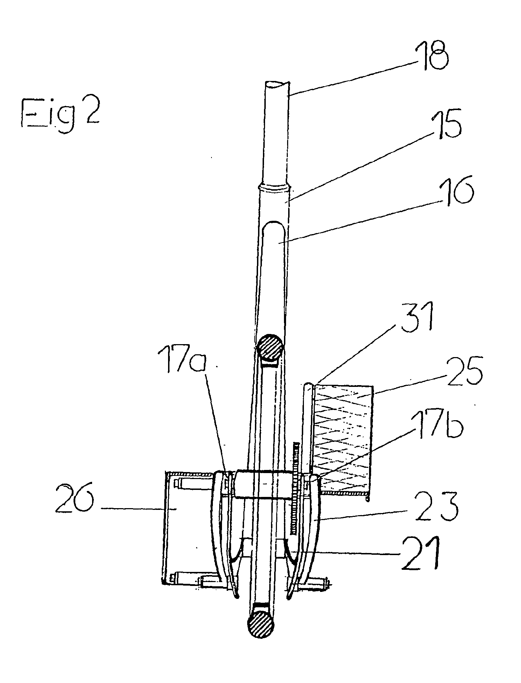

Gemäss Fig. 1 und 2 umfasst der Gymroller 10 einen Rahmen 11, an dessen in Fahrtrichtung gesehen vorderem Ende ein erstes Rad, das Vorderrad 12 und an dessen in Fahrtrichtung gesehenen entgegengesetzten Ende und zum Vorderrad 12 beabstandet ein zweites Rad, das Hinterrad 13, angeordnet ist. Der Rahmen 11 umfasst ein Chassis 14, ein Steuerrohr 15, das vermittels eines von der Fahrbahn, bzw. dem Chassis 14, schräg vorwärts vom vorderen Ende des Chassis 14 aufragenden Armes 16 mit dem Chassis 14 verbunden ist. Das hintere Ende des Chassis 14 trägt eine zweiarmige Gabel 17, bestehend aus zwei in Richtung der Achse des Hinterrades 13 zueinander beabstandeten Gabelarmen 17a, 17b, zwischen denen und an deren freien Enden das Hinterrad gelagert ist. Das vordere Ende des Chassis 14 ist das in Fahrtrichtung gesehene Ende, während das hintere Ende entgegen der Fahrtrichtung zu sehen ist. Das Steuerrohr 15 wird von einer Steuerstange 18 durchgriffen, an deren fahrbahnseitigem, d.h. unteren Ende das Vorderrad 12 und an deren entgegengesetztem freien Ende ein Lenker 19 angeordnet ist. Die Räder 12, 13 sind bevorzugt als luftbereifte Speichenräder ausgebildet, umfassend jeweils eine Nabe und eine Bereifung tragende Felge, die vermittels Speichen miteinander verbunden sind. Vorderrad 12 und Hinterrad 13 sind bevorzugt mit Bremseinrichtungen versehen. Diese können als manuell vom Lenker 19 aus mechanisch vermittels Seilzügen oder hydraulisch aktivierbare auf die Felgen, Reifen oder Naben wirkende Bremseinrichtungen ausgebildet sein. Von jedem Gabelarm 17a, 17b ragt eine Tragplatte 20, bzw. 21, mit dem jeweiligen Gabelarm verbunden, bei aufgerichtetem Gymroller 10 nach unten in Richtung auf die Fahrbahn ab. Jede Tragplatte 20, 21 weist an ihrem unteren freien Ende eine Lagerung 22, umfassend einen rechtwinklig von jeder Tragplatte 20, 21 abragenden Lagerzapfen und eine auf dem Lagerzapfen drehende Buchse auf. Die Lagerung 22 haltert das in Richtung auf die Fahrbahn bei aufgerichtetem Gymroller 10 untere Ende eines Schwenkhebels 23, der um die Lagerung Dreh- oder Schwenkbewegungen ausführen kann. In motiviertem Zustand erstreckt sich der Schwenkhebel 23 von der Lagerung 22, ausgehend in Richtung auf die Achse des Hinterrades 13 in etwa senkrecht aufwärts und trägt an seinem oberen freien, von der Lagerung 22 beabstandeten Ende, eine Halterung 24, auch umfassend beispielsweise einen vom Schwenkhebel 23 rechtwinklig abragenden Stehbolzen mit darauf angeordneter drehbarer Hülse oder Buchse, an die ein hinteres Ende eines Trittbrettes 25, 26 drehbar angelenkt ist. Die Schwenkhebel 23 stützen mithin ein Ende der Trittbretter 25, 26 gegen die Lagerung 22 auf den Tragplatten 21, 22 ab. Wegen des aufwärts gerichteten, stehenden Schwenkhebels 23 wird ein Antrieb unter Verwendung eines stehenden, aufwärts gerichteten Schwenkhebels 23 auch "stehender Antrieb" genannt. Das Chassis 14 kann als eine Platte aus tragfähigen Materialien wie Holz, Metall oder Kunststoffen ausgebildet sein. Auch kann es als ein profilierter Körper wie ein Metallprofil oder Metallrohr oder skelettförmig durch mehrere miteinander verbundene profilierte Körper gebildet sein. Nahe dem vorderen Ende des Chassis 14 ist der Antrieb 27 eines Kettentriebes angeordnet. Der Antrieb 27 besteht aus einem auf dem Chassis 14 gelagerten Kettenrad 29, das von einer Welle 30 durchgriffen wird, auf deren freien Enden je ein Kurbelarm 31 angeordnet ist, wobei sich die Kurbelarme 31 ausgehend von ihrer Anlenkung an die Welle 30 jeweils in genau entgegengesetzten Richtungen erstrecken. Wie Fig. 1 verdeutlicht, ist der eine Kurbelarm 31 senkrecht abwärts, während der andere Kurbelarm 31 senkrecht aufwärts gerichtet ist. Die Kurbelarme 31 weisen an ihren freien Enden, den Enden abgewandt von den Enden ihrer Anlenkung an die Welle 30, Anlenkeinrichtungen der Trittbretter 25, 26 an die freien Enden der Kurbelarme 31 auf. Diese Anlenkeinrichtungen können aus von den freien Enden rechtwinklig abragenden Stehbolzen mit darauf drehbar angeordneten Buchsen bestehen, an die die vorderen freien Enden der Trittbretter 25, 26 angeordnet sind. Die Trittbretter 25, 26 sind an ihren vorderen Enden an den freien Enden der Kurbelarme 31 und an ihren hinteren Enden an den freien Enden der aufwärtsgerichteten Schwenkhebel 23 gehaltert. Durchlaufen die Kurbelarme 31 durch Belastung der Trittbretter 25, 26 einen vollständigen Kreis, so vollführen die Schwenkhebel 23 eine Schwenkbewegung um die Lagerung 22 auf einem nach unten offenen Kreisbogensegment. Der Antrieb 27 umfasst neben dem auf dem Chassis 14 angeordneten Kettenrad 29 ein weiteres Kettenrad 32, das mit der Nabe des Hinterrades 13 in Eingriff steht, sowie eine die Kettenräder 29, 32 umlaufende Kette 33, die eine Drehbewegung des Kettenrades 29 auf das Kettenrad 33 überträgt. Das Übersetzungsverhältnis der Kettenräder 29, 32 ist in der beschriebenen Ausführungsform konstant und bemisst sich beispielsweise nach den Durchmessern der Kettenräder 29, 32. Ausgebildet sein kann der Antrieb 27 auch aus einer die Übersetzungen verändernde Kettentriebschaltung (nicht gezeigt), bei der mehrere Kettenräder 29, 32 axial nebeneinander angeordnet und eine Vorrichtung vorgesehen ist, die Kette 32 auf ein ausgewähltes, ein Übersetzungsverhältnis bestimmendes Räderpaar überzuleiten. Mit dieser Kettenschaltung wird der Tretkomfort einmal verbessert, andererseits wird damit eine zu gewünschten Trainingszwecken bevorzugte Kraftentfaltung ohne die Stellung auf den Trittbrettern 26, 27 erreicht.

Die Funktionsweise des Gymrollers nach der Erfindung ist folgende. Der auf den Trittbrettern 25, 26 stehende Fahrer tritt den aufrecht ragenden Kurbelarm 31 vermittels des an ihn angelenkten Trittbrettes 25 nach unten. Während dieser Abwärtsbewegung bewegt sich der andere Kurbelarm 31 mit Trittbrett 26 nach oben, also in entgegengesetzter Richtung, während die hinteren Enden der Trittbretter 26, 27 mit den pendelnden Schwenkhebeln 23 eine hin- und hergehende Bewegung auf einem Kreisbogensegment ausführen. Die Drehbewegung des Kettenrades 29 wird vermittels der Kette 33 auf das Kettenrad 32 übertragen, wodurch der Gymroller 10 angetrieben wird. Mit dem beschriebenen "stehenden Antrieb" wurde die Aufgabe der Erfindung erfüllt, den Tretkomfort des "hängenden Antriebes" vorzugsweise mit einfachen technischen Mitteln spürbar zu verbessern.

## Patentansprüche

1. Multifunktions-Roller umfassend einen Rahmen (11) mit einem Chassis (14), an das einends über ein Steuerrohr (15) mit Steuerstange (18) ein Vorderrad (12) und anderenends über eine Gabel (17) ein Hinterrad (13) angelenkt ist, einen Antrieb (27) bestehend aus einem Kettentrieb, umfassend ein auf dem Chassis (14) angeordneten Kettenrad (29) mit Kurbelarmen (31), einem am Hinterrad (12) angeordneten Kettenrad (32), einer die Kettenräder (29, 32) umlaufenden Kette (33), sowie Trittbrettern (25, 26), die einends an den Kurbelarmen (31) und anderenends an Armen (17a, 17b) einer am Chassis (14) angeordneten Gabel (17) vermittels Schwenkhebeln (23) gelagert sind, **dadurch gekennzeichnet, dass** an den Armen (17a, 17b) der Gabel (17) in Richtung auf eine Fahrbahn abragende Tragplatten (20, 21) mit an ihren freien Enden für Schwenkbewegungen schwenkbar angelenkten, von den freien Enden aufragende Schwenkhebel (23) vorgesehen sind.

2. Multifunktions-Roller nach Anspruch 1, **dadurch gekennzeichnet, dass** der Kettentrieb als eine Kettentriebschaltung ausgebildet ist.

## Claims

1. Multifunctional-scooters comprising a frame (11) with a chassis (14) on to which one's end via steering-tube (15) with steering-rod (18) a front-wheel (12) and at the other end via a fork 17) a rear-wheel (13) is fixed onto a drive (27), consisting of a chain-drive, including, mounted on the chassis (14), a tooth-wheel (29) with crank-arms (31), placed at the rear-wheel (12) a tooth-wheel (32), both tooth-wheels (29, 32) circulating chain (33), as well as running-boards (25, 26), which are pivoted at ones' ends at the crank-arms (31) and the other ends at arms (17a, 17b) of an at the chassis (14) placed fork (17) with swivel-levers (23) **characterized** thereby that at the fork's (17) arms (17a, 17b), supporting-plates (20,21) looming into downwards direction with, mounted at their free ends, for swivelling movements, looming upwards swivel-arms (23) are provided.

2. Multifunctional-scooters according to claim 1, **characterized** thereby that by the chain-drive, which is provided in form of a multiple-gear-chain-drive.

## Revendications

1. Scooters de plusieurs fonctions contenant un cadre (11) avec un chassis (14) à dont un bout par tube de guidon (15) avec un tige de guidon (18) une roue avant (12) et dont autre bout par une fourche (17) une roue arrière (13) est fixé, une impulsion (27) existant d'une transmission par chaîne, contenant fixé sur le chassis (14) une roue à chaîne (29) avec bras de manivelle (31), fixés à la roue arrière (12) une roue à chaîne (32), avec une chaîne (33) circulant les roues à chaîne (29, 32) aussi bien que marchepieds (25, 26) lesquelles étant monté en paliers à un bout avec bras de manivelle (31) et à l'autre bout avec ses bras (17a, 17b) à une fourche (17) au chassis (14) moyennant de leviers pivotants (23), définés moyennant, qu'au bras (17a, 17b) de la fourche (17) sont fixés, s'élevant en direction vers une chaussée, de plaques supportantes (20, 21) étant montés à ses bouts libres pour des mouvements pivotants des leviers pivotants (23) s'élevant de ses bouts libres.

2. Scooters de plusieurs fonctions suivant la revendication Nr. 1, définés moyennant, que la transmission par chaîne est crée qu'une vitesse.
